# FASCICULE DE BREVET EUROPEEN

(11) **EP 1 990 237 B1**
(45) Date de publication et mention de la délivrance du brevet: **04.03.2015**
(21) Numéro de dépôt: 08300178.4
(22) Date de dépôt: 14.04.2008
(51) Int. Cl.: B60P 7/15

(54) **Ensemble de barres de maintien de charge pour l'espace de chargement d'un véhicule automobile**
Ladungshaltestangen-Vorrichtung für den Laderaum eines Kraftfahrzeugs
Assembly of load bearing bars for the cargo space of an automobile

(30) Priorité: 09.05.2007 FR 0703308
(43) Date de publication de la demande: 12.11.2008
(73) Titulaire: Renault S.A.S., 92100 Boulogne-Billancourt (FR)
(72) Inventeur: Michelin, Didier, 78950 GAMBAIS (FR)

(56) Documents cités:
- EP-B- 0 130 663
- DE-A1- 2 648 543
- US-A- 3 217 449
- US-B1- 6 739 811

## Description

La présente invention concerne un ensemble de barres de maintien de charge pour l'espace de chargement d'un véhicule automobile.

Un tel ensemble comporte :
- au moins une barre principale qui comporte une surface externe et qui est apte à être montée verticalement dans l'espace de chargement de véhicule ;
- au moins une barre auxiliaire qui comporte deux extrémités et qui est adaptée pour être montée perpendiculairement entre deux barres principales et/ou entre une barre principale et une fixation sur la caisse du véhicule, et qui définit, lorsqu'elle est montée, une direction de montage ; et
- des moyens de fixation d'au moins une extrémité de la barre auxiliaire à au moins une barre principale.

Ce type d'ensemble permet d'aménager facilement l'espace de chargement d'un véhicule automobile afin de sécuriser le transport d'une charge quelconque disposée dans l'espace de chargement du véhicule. Les barres permettent, en effet, de caler la charge selon deux, ou même, trois directions, assurant ainsi son maintien et empêchant tout dommage.

Un ensemble de ce type est connu du document US 6739811 B.

Le document US 4 332 515 décrit une barre qui est montée perpendiculairement à une paroi. Cette barre comprend des moyens de fixation qui comportent un élément de blocage qui fait saillie à l'extrémité de la barre et qui est poussé par des moyens formant ressort. Cet élément de blocage vient s'emboîter dans un trou ménagé dans la paroi sur laquelle est montée la barre.

Un but de la présente invention est de proposer un ensemble de barres tel que précité qui comporte de nouveaux moyens de fixation.

Ce but est atteint au moyen d'un ensemble de barres de maintien de charge pour l'espace de chargement d'un véhicule automobile comprenant, de manière connue, au moins une barre principale qui comporte une surface externe et qui est apte à être montée verticalement dans l'espace de chargement d'un véhicule automobile, au moins une barre auxiliaire qui comporte deux extrémités et qui est montée perpendiculairement entre deux barres principales et/ou entre une barre principale et une fixation sur la caisse du véhicule et qui définit ainsi une direction de montage, et des moyens de fixation d'au moins une extrémité de ladite barre auxiliaire à au moins une barre principale. Selon l'invention, lesdits moyens de fixation comportent :
- au moins une paire d'éléments de support qui font saillie de ladite surface externe de ladite barre principale, lesdits éléments de support étant disposés de part et d'autre de ladite direction de montage ;
- un embout disposé au moins à une extrémité de ladite barre auxiliaire, ledit embout comportant deux encoches, orientées selon une direction sensiblement perpendiculaire à ladite direction de montage, chacune desdites encoches comportant un fond contre lequel prend appui un desdits éléments de support, sous l'effet du poids de ladite barre auxiliaire, lorsque ladite barre auxiliaire est montée sur ladite barre principale.

Le poids de la barre auxiliaire assure un bon maintien de cette dernière sur la barre principale.

Le mode de réalisation des éléments de support n'est pas limité selon l'invention. Il peut s'agir d'ergots disposés sur la surface externe de la barre principale. Selon un mode de réalisation, ladite barre principale comporte au moins un passage transversal et lesdits éléments de support sont les extrémités d'une tige traversant ledit passage transversal.

Selon une variante de ce mode de réalisation des éléments de support, ledit passage débouche sur ladite surface externe au niveau d'une ouverture d'insertion de ladite tige, ladite tige comporte une portion longitudinale, insérée dans ledit passage et qui se prolonge longitudinalement par une portion renflée, disposée à une extrémité de ladite portion longitudinale, ladite portion renflée présente une section transversale de dimension sensiblement égale ou supérieure à la section de ladite ouverture d'insertion, ladite portion renflée est disposée dans ladite ouverture d'insertion et ladite portion renflée se prolonge longitudinalement par un épaulement radial qui est en contact avec ladite surface externe de ladite barre principale, autour de ladite ouverture d'insertion, moyennant quoi ladite tige est insérée sans jeu à travers ledit passage.

Avantageusement, au moins une desdites encoches comporte un moyen de blocage en translation axiale de ladite tige, ledit moyen est disposé en regard de ladite extrémité respective de ladite tige de manière à empêcher ladite tige de glisser hors dudit passage.

L'ensemble selon l'invention peut également comporter des moyens de positionnement élastiques de ladite barre auxiliaire qui comportent :
- un élément de positionnement monté dans ladite barre auxiliaire, qui fait saillie au niveau dudit embout selon ladite direction de montage et qui peut se déformer et/ou pénétrer au moins partiellement dans ladite barre auxiliaire sous l'effet d'une force sensiblement parallèle à ladite direction de montage ; et
- au moins une portion de réception, ménagée à la surface externe de ladite barre principale ;
et ledit élément de positionnement coopère avec ladite portion de réception pour indexer ladite barre auxiliaire.

La barre auxiliaire peut être une barre télescopique du type comportant un tube extérieur et un tube intérieur qui est monté coulissant axialement dans ledit tube extérieur.

De même, la barre principale peut être une barre télescopique du type comportant un tube extérieur et un tube intérieur qui est monté coulissant axialement dans ledit tube extérieur.

La présente invention, ses caractéristiques et les différents avantages qu'elle procure seront mieux compris à la lecture de la description qui suit de deux modes de réalisation, présentés à titre d'exemples non limitatifs, et qui fait référence aux dessins annexés, sur lesquels :
- la figure 1 représente une vue partielle en coupe longitudinale d'un premier mode de réalisation ;
- la figure 2 représente une vue en coupe transversale d'un détail du premier mode de réalisation ; et
- la figure 3 représente une vue en coupe transversale d'un détail d'un second mode de réalisation.

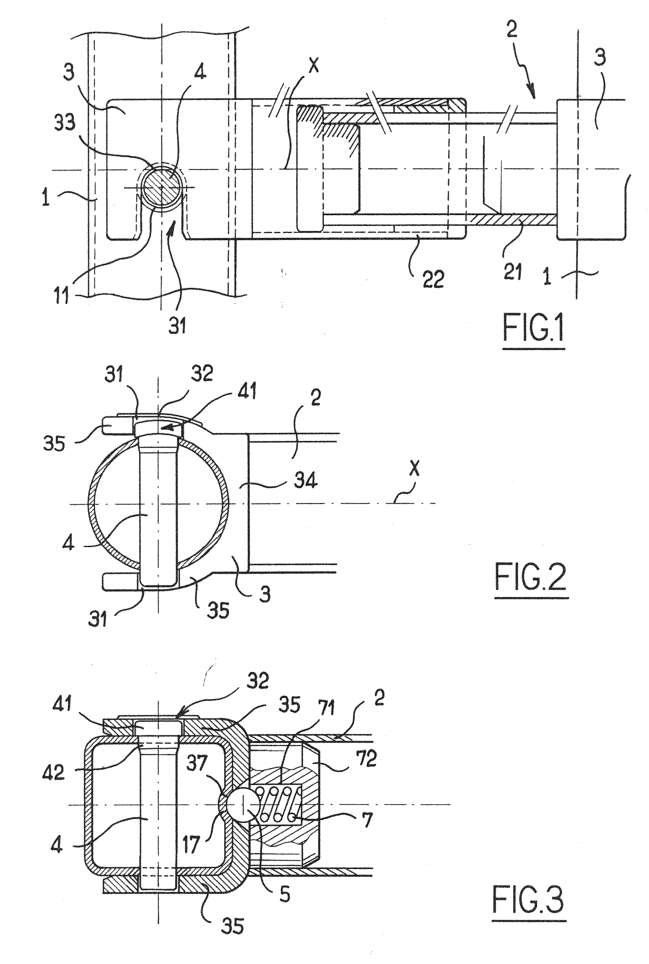

En référence à la figure 1, un premier mode de réalisation de l'invention comporte deux barres principales 1, qui sont disposées verticalement dans l'espace de chargement d'un véhicule automobile. Une barre auxiliaire 2 est disposée entre ces deux barres principales 1 et perpendiculairement à ces dernières. Cette barre auxiliaire 2 définit une direction de montage X. La barre auxiliaire 2 est télescopique et formée d'un tube interne 21 qui coulisse dans un tube externe 22. Chacun des deux tubes 21 et 22 comporte à son extrémité libre un embout 3. Cet embout 3 entoure partiellement la section transversale de la barre principale 1 et comporte deux fentes 31. La barre principale 1 comporte une pluralité de perforations transversales 11. Une tige 4 est insérée dans au moins une de ces perforations 11, de manière à ce que les extrémités de la tige 4 dépassent de la surface externe de la barre principale 1. Dans le cas présent, la perforation 11 correspond à l'axe de symétrie de la section transversale de la barre principale 1. La perforation 11 est perpendiculaire à la direction de montage X. Les extrémités de la tige 4 sont en butée dans le fond 33 des fentes 31, lorsque la barre auxiliaire est soumise à l'action de son poids, c'est-à-dire lorsqu'elle est suspendue entre les deux barres principales 1.

Les éléments des modes de réalisation représentés sur les figures 2 et 3 qui sont en commun avec le premier mode de réalisation décrit ci-dessus sont référencés à l'identique.

Comme représenté sur la figure 2, sur chaque embout 3, une fente 31 comporte une façade 32 qui la ferme au niveau de la surface externe de l'embout 3, selon une direction sensiblement parallèle à la barre principale 1. L'extrémité de la tige 4 logée dans cette fente 31 est alors disposée à l'arrière de la façade 32. Cette façade 32 permet d'éviter un déboîtement accidentel de la tige 4. Les fonds 33 des fentes 31 restent en contact avec les extrémités de la tige 4, lorsque la barre auxiliaire 2 est montée sur la barre principale 1. La tige 4 comporte une portion longitudinale qui est insérée dans le passage 11, une portion renflée 42 qui prolonge la portion longitudinale et qui est insérée en force dans l'ouverture du passage 11 qui est située sur la surface externe de la barre principale 1. La portion renflée 42 se prolonge par un épaulement radial 41 qui vient en appui contre la surface externe de la barre principale 1, autour de la perforation transversale 11. Cet épaulement 41 est logé dans la fente 31 qui ne comporte pas la façade 32. Cet épaulement 41 peut servir, par exemple, à enfoncer la tige 4 dans la perforation 11, à l'aide d'un maillet. La tige est ainsi insérée sans jeu dans le passage 11, du fait de la présence de la partie renflée 42 qui présente un diamètre sensiblement égal ou supérieur au diamètre du passage 11. Cet épaulement 41 aide aussi à positionner de suite la tige 4 à la hauteur désirée sur la barre principale 1. La barre principale 1 a une section circulaire et la perforation 11 correspond au diamètre de la section de la barre principale 1 qui est perpendiculaire à la direction de montage X. L'embout 3 comporte une partie 34, fixée à l'extrémité de la barre auxiliaire 2 et deux branches 35 qui forment une fourche entourant la section de la barre principale 1. Les fentes 31 sont ménagées, chacune dans une branche 35 de la fourche précitée. L'embout 3 épouse, de préférence, toute la surface externe de la barre principale 1. Ainsi, dans le cas présent, les deux branches 35 et la partie de fixation 34 forment au moins un demi cercle dans lequel vient se loger la barre principale 1.

En référence à la figure 3, qui représente un second mode de réalisation, la barre principale 1 présente une section carrée et dans ce cas, l'embout 3 comporte deux branches parallèles 35 qui viennent épouser les deux faces opposées de la section de la barre principale 1. Dans ce second mode de réalisation, l'ensemble comporte également des moyens de positionnement qui comportent une bille 5, logée dans la barre auxiliaire 2. Cette bille 5 est maintenue par un ressort 7 logé dans une cavité 7 ménagée dans une pièce de fixation 72 qui est entrée en force dans la barre auxiliaire 2. La pièce de fixation 72 est fixée par frottements dans l'extrémité de la barre auxiliaire 2 et maintient ainsi le ressort 7 et la bille 5. L'embout 3 comporte une lumière 37 à travers laquelle dépasse une portion de la surface externe de la bille 5. La surface externe de la barre principale 1 comporte une pluralité de portions de réception 17, disposées sensiblement au niveau des perforations 11 et donc espacées du même pas que ces dernières. La portion de la surface externe de la bille 5 qui dépasse de la lumière 37, vient s'emboîter dans la portion de réception 17 de manière à sécuriser la fixation de la barre auxiliaire 2 sur la barre principale 1. De plus, l'engagement de la bille 5 dans la portion de réception 17 provoque, pour l'utilisateur une sensation tactile et/ou sonore qui le renseigne sur le positionnement correcte de la barre auxiliaire 2.

Les moyens de positionnement précités peuvent être mis en oeuvre avec une barre de section circulaire, comme dans le cas du premier mode de réalisation.

Le montage de l'ensemble selon l'invention est le suivant.

L'utilisateur place tout d'abord les barres principales 1, verticalement dans l'espace de chargement du véhicule automobile. Il insère ensuite une tige 4 dans une des perforations 11 de la barre principale 1, à la hauteur désirée pour le chargement. La tige 4 peut être insérée sans jeu dans la perforation 11 de manière à éviter tout problème de vibration et tout matage prématuré des perforations 11. L'insertion des tiges 4 peut être mise en oeuvre avec un maillet. La pluralité de passages 11 permet de bien choisir la position de fixation de la barre auxiliaire 2.

L'utilisateur saisit ensuite une barre auxiliaire 2 et la déploie entre las barres 1, afin qu'elle ait une longueur correspondant sensiblement à l'espacement entre les deux barres principales 1 (ou entre une barre principale 1 et la cloison de l'espace de chargement, par exemple). Il oriente ensuite les fentes 31 de manière à ce que leur ouverture soit dirigée vers le sol du véhicule automobile. Il insère ensuite les extrémités de la tige 4 qui dépassent de la surface externe de la barre principale 1, dans les fentes 31. Sous l'effet de son propre poids, la barre auxiliaire 2 tombe jusqu'à ce que les extrémités de la tige 4 viennent en butée contre le fond 33 des fentes 31.

Dans le cas du second mode de réalisation, la bille 5 roule sur la surface externe de la barre principale et/ou s'enfonce légèrement dans la barre auxiliaire 2, ce qui peut obliger l'utilisateur à pousser légèrement la barre auxiliaire 2 afin d'enclencher les extrémités de la tige 4 dans les fentes 31. Lorsque le fond 33 des fentes 31 vient au contact de la tige 4, simultanément, la portion de la bille 5 roulant sur la surface externe de la barre principale 1 s'engage dans la portion de réception 17, le ressort 7 poussant la bille 5 dans la direction de montage X, hors de la barre auxiliaire 2. Il s'ensuit un déclic sonore ou une simple sensation tactile générée par l'emboîtement de la bille 5, poussée par le ressort 7 dans la portion de réception 17. L'utilisateur sait alors qu'il a correctement positionné la barre auxiliaire 2. L'engagement de la bille 5 dans la portion de réception 17 permet également de renforcer la fixation de la barre auxiliaire 2 sur la barre principale 1. Un ou les deux embouts 3 peuvent comporter ce type de moyens de positionnement. La bille 5 peut être rigide ou en matériau élastiquement déformable. Dans ce dernier cas, le ressort 7 peut être omis.

## Revendications

1. Ensemble de barres de maintien de charge pour l'espace de chargement d'un véhicule automobile, afin de sécuriser le transport d'une charge quelconque disposée dans cet espace, comprenant au moins une barre principale (1) qui comporte une surface externe et qui est apte à être montée verticalement dans l'espace de chargement du véhicule, au moins une barre auxiliaire (2) qui comporte deux extrémités et qui est montée perpendiculairement entre deux barres principales (1) et/ou entre une barre principale et une fixation sur la caisse du véhicule et qui définit ainsi une direction de montage (X), et des moyens de fixation d'au moins une extrémité de ladite barre auxiliaire à au moins une barre principale, **caractérisé en ce que** lesdits moyens de fixation comportent :
- au moins une paire d'éléments de support qui font saillie de ladite surface externe de ladite barre principale (1), lesdits éléments de support étant disposés de part et d'autre de ladite direction de montage (X);
- un embout (3) disposé au moins à une extrémité de ladite barre auxiliaire (2), ledit embout (3) comportant deux encoches (31), orientées selon une direction sensiblement perpendiculaire à ladite direction de montage (X), chacune desdites encoches (31) comportant un fond (33) contre lequel prend appui un desdits éléments de support, sous l'effet du poids de ladite barre auxiliaire (2), lorsque ladite barre auxiliaire (2) est montée sur ladite barre principale (1).

2. Ensemble selon la revendication 1, **caractérisé en ce que** ladite barre principale (1) comporte au moins un passage transversal (11) et **en ce que** lesdits éléments de support sont les extrémités d'une tige (4) traversant ledit passage transversal (11).

3. Ensemble selon la revendication 2, **caractérisé en ce que** ledit passage (11) débouche sur ladite surface externe au niveau d'une ouverture d'insertion de ladite tige (4), **en ce que** ladite tige (4) comporte une portion longitudinale, insérée dans ledit passage (11)et qui se prolonge longitudinalement par une portion renflée (42), disposée à une extrémité de ladite portion longitudinale, **en ce que** ladite portion renflée (42) présente une section transversale de dimension sensiblement égale ou supérieure à la section de ladite ouverture d'insertion, **en ce que** ladite portion renflée (42) est disposée dans ladite ouverture d'insertion et **en ce que** ladite portion renflée (42) se prolonge longitudinalement par un épaulement radial (41) qui est en contact avec ladite surface externe de ladite barre principale (1), autour de ladite ouverture d'insertion, moyennant quoi ladite tige (4) est insérée sans jeu à travers ledit passage (11).

4. Ensemble selon l'une quelconque des revendications 2 et 3, **caractérisé en ce qu'**au moins une desdites encoches (31) comporte un moyen de blocage (32) en translation axiale de ladite tige (4), **en ce que** ledit moyen (32) est disposé en regard de ladite extrémité respective de ladite tige (4), de manière à empêcher ladite tige (4) de glisser hors dudit passage (11).

5. Ensemble selon l'une quelconque des revendications précédentes, **caractérisé en ce qu'**il comporte des moyens de positionnement élastiques de ladite barre auxiliaire qui comportent :
- un élément de positionnement (5), monté dans ladite barre auxiliaire (2), qui fait saillie au niveau dudit embout (3), selon ladite direction de montage (X) et qui peut se déformer et/ou pénétrer au moins partiellement dans ladite barre auxiliaire (2) sous l'effet d'une force sensiblement parallèle à ladite direction de montage (X) ; et
- au moins une portion de réception (17), ménagée à la surface externe de ladite barre principale ;
et **en ce que** ledit élément de positionnement (5) coopère avec ladite portion de réception (17) pour indexer ladite barre auxiliaire (2).

6. Ensemble selon l'une quelconque des revendications 1 à 5, **caractérisé en ce que** ladite barre auxiliaire (2) est une barre télescopique du type comportant un tube extérieur (22) et un tube intérieur (21) qui est monté coulissant axialement dans ledit tube extérieur (22).

7. Ensemble selon l'une quelconque des revendications 1 à 6, **caractérisé en ce que** ladite barre principale (1) est une barre télescopique du type comportant un tube extérieur et un tube intérieur qui est monté coulissant axialement dans ledit tube extérieur.

## Patentansprüche

1. Gruppe von Stangen zum Halten einer Ladung für den Laderaum eines Kraftfahrzeugs, um den Transport einer beliebigen Ladung zu sichern, die in diesem Raum angeordnet ist, mit mindestens einer Hauptstange (1), die eine äußere Oberfläche umfasst und die vertikal im Laderaum des Fahrzeugs montiert werden kann, mindestens einer Hilfsstange (2), die zwei Enden umfasst und die senkrecht zwischen zwei Hauptstangen (1) und/oder zwischen einer Hauptstange und einer Befestigung an der Karosserie des Fahrzeugs montiert ist und die somit eine Montagerichtung (X) definiert, und Mitteln zur Befestigung mindestens eines Endes der Hilfsstange an mindestens einer Hauptstange, **dadurch gekennzeichnet, dass** die Befestigungsmittel Folgendes umfassen:
- mindestens ein Paar von Stützelementen, die von der äußeren Oberfläche der Hauptstange (1) vorstehen, wobei die Stützelemente auf beiden Seiten der Montagerichtung (X) angeordnet sind;
- ein Ansatzstück (3), das mindestens an einem Ende der Hilfsstange (2) angeordnet ist, wobei das Ansatzstück (3) zwei Kerben (31) umfasst, die in einer Richtung im Wesentlichen senkrecht zur Montagerichtung (X) orientiert sind, wobei jede der Kerben (31) einen Boden (33) umfasst, an dem eines der Stützelemente unter der Wirkung des Gewichts der Hilfsstange (2) anliegt, wenn die Hilfsstange (2) an der Hauptstange (1) montiert ist.

2. Gruppe nach Anspruch 1, **dadurch gekennzeichnet, dass** die Hauptstange (1) mindestens einen Querdurchgang (11) umfasst und die Stützelemente die Enden eines Stabes (4) sind, der den Querdurchgang (11) durchquert.

3. Gruppe nach Anspruch 2, **dadurch gekennzeichnet, dass** der Durchgang (11) an der äußeren Oberfläche auf der Höhe einer Öffnung zum Einsetzen des Stabes (4) mündet und dass der Stab (4) einen longitudinalen Abschnitt umfasst, der in den Durchgang (11) eingesetzt ist und der sich longitudinal durch einen bauchigen Abschnitt (42) verlängert, der an einem Ende des longitudinalen Abschnitts angeordnet ist, und dass der bauchige Abschnitt (42) einen Querschnitt mit einer Abmessung aufweist, die im Wesentlichen gleich oder größer als der Querschnitt der Einsetzöffnung ist, und dass der bauchige Abschnitt (42) in der Einsetzöffnung angeordnet ist und dass der bauchige Abschnitt (42) sich longitudinal durch einen radialen Absatz (41) verlängert, der mit der äußeren Oberfläche der Hauptstange (1) um die Einetzöffnung in Kontakt steht, mittels dessen der Stab (4) ohne Spiel durch den Durchgang (11) eingesetzt ist.

4. Gruppe nach einem der Ansprüche 2 und 3, **dadurch gekennzeichnet, dass** mindestens eine der Kerben (31) ein Mittel zum Blockieren (32) der axialen Translation des Stabes (4) umfasst und dass das Mittel (32) gegenüber dem jeweiligen Ende des Stabes (4) angeordnet ist, um zu verhindern, dass der Stab (4) aus dem Durchgang (11) gleitet.

5. Gruppe nach einem der vorangehenden Ansprüche, **dadurch gekennzeichnet, dass** sie elastische Mittel zur Positionierung der Hilfsstange umfasst, die Folgendes umfassen:
- ein Positionierungselement (5), das in der Hilfsstange (2) montiert ist, das auf der Höhe des Ansatzstücks (3) entlang der Montagerichtung (X) vorsteht und das sich verformen und/oder zumindest teilweise in die Hilfstange (2) unter der Wirkung einer Kraft eindringen kann, die zur Montagerichtung (X) im Wesentlichen parallel ist; und
- mindestens einen Aufnahmeabschnitt (17), der an der äußeren Oberfläche der Hauptstange ausgebildet ist;
und dass das Positionierungselement (5) mit dem Aufnahmeabschnitt (17) zusammenwirkt, um die Hilfsstange (2) zu indizieren.

6. Gruppe nach einem der Ansprüche 1 bis 5, **dadurch gekennzeichnet, dass** die Hilfsstange (2) eine Teleskopstange des Typs mit einem äußeren Rohr (22) und einem inneren Rohr (21) ist, das axial gleitend im äußeren Rohr (22) montiert ist.

7. Gruppe nach einem der Ansprüche 1 bis 6, **dadurch gekennzeichnet, dass** die Hauptstange (1) eine Teleskopstange des Typs mit einem äußeren Rohr und einem inneren Rohr ist, das axial gleitend im äußeren Rohr montiert ist.

## Claims

1. Assembly of load-retaining bars for the loading space of a motor vehicle in order to secure the transportation of any type of load arranged in this space, comprising at least one main bar (1) which has an external surface and which is able to be mounted vertically in the loading space of the vehicle, at least one auxiliary bar (2) which has two ends and which is mounted perpendicularly between main bars (1) and/or between one main bar and a mounting on the body of the vehicle and which thus defines a mounting direction (X), and means for fastening at least one end of the said auxiliary bar to at least one main bar, **characterized in that** the said fastening means comprise:
- at least one pair of support elements which project from the said external surface of the said main bar (1), the said support elements being arranged on both sides of the said mounting direction (X);
- an end-piece (3) arranged at least at one end of the said auxiliary bar (2), the said end-piece (3) having two notches (31) oriented in a direction substantially perpendicular to the said mounting direction (X), each of the said notches (31) having a base (33) against which there bears one of the said support elements under the effect of the weight of the said auxiliary bar (2) when the said auxiliary bar (2) is mounted on the said main bar (1).

2. Assembly according to Claim 1, **characterized in that** the said main bar (1) has at least one transverse passage (11), and **in that** the said support elements are the ends of a rod (4) passing through the said transverse passage (11).

3. Assembly according to Claim 2, **characterized in that** the said passage (11) opens onto the said external surface at an opening for the insertion of the said rod (4), **in that** the said rod (4) has a longitudinal portion which is inserted into the said passage (11) and which is extended longitudinally by a widened portion (42) arranged at one end of the said longitudinal portion, **in that** the said widened portion (42) has a cross section with a dimension substantially equal or greater than the cross section of the said insertion opening, **in that** the said widened portion (42) is arranged in the said insertion opening, and **in that** the said widened portion (42) is extended longitudinally by a radial shoulder (41) which is in contact with the said external surface of the said main bar (1), around the said insertion opening, whereby the said rod (4) is inserted without clearance through the said passage (11).

4. Assembly according to either one of Claims 2 and 3, **characterized in that** at least one of the said notches (31) has a means (32) for immobilizing the said rod (4) against axial translation, **in that** the said means (32) is arranged facing the said respective end of the said rod (4) so as to prevent the said rod (4) from sliding out of the said passage (11).

5. Assembly according to any one of the preceding claims, **characterized in that** it comprises elastic means for positioning the said auxiliary bar which comprise:
- a positioning element (5), mounted in the said auxiliary bar (2), which projects at the said end-piece (3) in the said mounting direction (X) and which can deform and/or penetrate at least partially in the said auxiliary bar (2) under the effect of a force substantially parallel to the mounting direction (X); and
- at least one receiving portion (17) formed at the external surface of the said main bar;
and **in that** the said positioning element (5) cooperates with the said receiving portion (17) to index the said auxiliary bar (2).

6. Assembly according to any one of Claims 1 to 5, **characterized in that** the said auxiliary bar (2) is a telescopic bar of the type comprising an outer tube (22) and an inner tube (21) which is mounted so that it can slide axially in the said outer tube (22).

7. Assembly according to any one of Claims 1 to 6, **characterized in that** the said main bar (1) is a telescopic bar of the type comprising an outer tube and an inner tube which is mounted so that it can slide axially in the said outer tube.
